# EUROPÄISCHE PATENTSCHRIFT

(11) **EP 2 321 666 B1**
(45) Veröffentlichungstag und Bekanntmachung des Hinweises auf die Patenterteilung: **17.12.2014**
(21) Anmeldenummer: 09775943.5
(22) Anmeldetag: 08.07.2009
(51) Int. Cl.: G01S 17/02, G06K 9/00, G01S 13/86, G01S 13/93

(54) **VERFAHREN ZUR ERKENNUNG AUSGEDEHNTER STATISCHER OBJEKTE**
METHOD FOR DETECTING EXPANSIVE STATIC OBJECT
PROCÉDÉ DE RECONNAISSANCE D'OBJETS STATIQUES ÉTENDUS PAR UN VÉHICULE QUI ROULE

(30) Priorität: 12.08.2008 DE 102008038731
(43) Veröffentlichungstag der Anmeldung: 18.05.2011
(73) Patentinhaber: Continental Automotive GmbH, 30165 Hannover (DE)
(72) Erfinder: GLANDER, Karl-Heinz, 71522 Backnang (DE); BARATOFF, Gregory, Dr., 88239 Wagen (DE)
(74) Vertreter: Bobbert, Christiana
(86) Internationale Anmeldenummer: PCT/DE2009/000955
(87) Internationale Veröffentlichungsnummer: WO 2010/017791

(56) Entgegenhaltungen:
- EP-A- 1 403 660
- WO-A-2005/103757
- DE-A1-102004 057 296
- DE-A1-102005 039 167
- DE-A1-102008 003 950
- US-A1- 2002 067 287
- US-A1- 2003 179 084
- US-A1- 2007 188 347

## Beschreibung

Die Erfindung betrifft ein Verfahren zur Erkennung ausgedehnter statischer Objekte von einem fahrenden Fahrzeug aus. Dazu arbeitet das Verfahren mit einer Frontkamera, die mit einer Bildverarbeitungseinrichtung zusammenwirkt. Die Frontkamera kann Fahrbahnmarkierungen auf der Straße erfassen. Eine seitliche Erfassungsvorrichtung erfasst Gegenstände im toten Winkel zum Fahrzeug. Weitere Erfassungsvorrichtungen erfassen minimale Abstände zu seitlich vorbeifahrenden oder nachfolgenden Fahrzeugen.

Aus der Druckschrift DE 199 34 670 B1 ist ein Objektdetektionssystem bekannt, das mit wenigstens drei Objektdetektoren im Frontbereich des Fahrzeugs aus sich überschneidenden Detektorbereichen Messwerte zu gesonderter Auswertung liefert. Dabei bezieht sich die gesonderte Auswertung auf unterschiedliche Entfernungen zwischen der Fahrzeugfrontseite und den sich in unterschiedlicher Entfernung vor dem Fahrzeug bewegenden Objekten.

Aus der Druckschrift DE 10 2006 010 662 A1 ist darüber hinaus ein Spurwechselwarnsystem bekannt mit einer Sensorik einer Frontkamera und einer Heckkamera, womit unterschiedliche Umgebungsbereiche des Kraftfahrzeugs erfasst werden, um den Fahrer vor Überschreitungen von Fahrbahnbegrenzungen zu warnen. Darüber hinaus ist aus der Druckschrift DE 103 23 144 A1 ein Verfahren und eine Vorrichtung zur Detektion von Objekten in der Umgebung eines Fahrzeugs bekannt, bei dem die Sensorik in der Lage ist, den Fahrer vor sich verkürzenden Abständen zu Fahrzeugen insbesondere im seitlichen toten Winkel zu warnen.

Aus der Druckschrift US 2002/0067287 A1 ist ein System zur Detektion von Objekten in der Nähe eines Fahrzeug bekannt, das mehrere Radarsensoren und einen vorwärtsgerichteten elektrooptischen Sensor umfasst zum Einsatz für verschiedene Fahrerassistenzfunktionen.

Aus der Druckschrift US 2007/0188347 A1 ist eine Spurwechselunterstützung für ein Fahrzeug bekannt, bei dem Daten aus Kamera- und Radarsensoren fusioniert werden, um eine Erkennung von Objekten seitlich des Fahrzeugs bei allen Wetter- und Sichtbedingungen zu gewährleisten.

Die Druckschrift US 2003/0179084 A1 zeigt als nächstliegender Stand der Technik die Architektur eines Systems zur Sensorfusion, bei der mittels gleichzeitiger Überwachung mehrerer Zonen um das Fahrzeug mittels je eines Radarsensors und einer Kamera alle Objekte (statische und dynamische) in der Umgebung des Fahrzeugs durch die doppelten Sensordaten aller Zonen erkannt und lokalisiert werden können.

Bei der bekannten Toten-Winkel-Überwachung oder dem oben genannten Spurwechselassistenten handelt es sich um Radarapplikationen, die auch mit Infrarot- oder Lasersensoren arbeiten können, wobei die Sensoren zur seitlichen und rückwärtigen Objekterkennung eingesetzt werden. Dabei überwacht der Spurwechselassistent den seitlichen und rückwärtigen Bereich eines Fahrzeugs und versucht aus den gemessenen Daten zu entscheiden, ob sich das eigene Fahrzeug in einem durch ein anderes Fahrzeug verursachten kritischen Zustand befindet, nämlich in einem toten Winkel zum eigenen Fahrzeug befindet oder sich mit einer hohen Relativgeschwindigkeit von hinten auf das eigene Fahrzeug zu bewegt.

Wird ein derart kritischer Zustand detektiert, wird der Fahrer umgehend gewarnt. Für den Fall jedoch, dass sich nicht kritische Objekte, zu denen u.a. überholte statische Objekte zählen, beispielsweise im toten Winkel aufhalten, soll der Fahrer nicht gewarnt werden. Die Trennung von statischen und nicht statischen bzw. dynamischen Objekten ist je nach Auslegung der auf RADAR basierenden Sensoren oder LIDAR Sensoren, wenn Sie auf Lichtradar basieren, und der Applikation nicht gänzlich ohne Fehler möglich, so dass die Zuverlässigkeit derartiger Systeme begrenzt ist.

Es besteht somit der Bedarf, die Fahrerassistenzfunktionen sowie die Tote-Winkel-Überwachung und den Spurassistenten für eine fehlerarme Klassifikation von relevanten und nicht relevanten Objekten zu verbessern. Bisher wurde versucht aus den Einzelmessungen der Sensoren, die Kinematik der beobachteten Objekte relativ zum Fahrzeug und der Straße zu berechnen, um eine Entscheidung bezüglich statischer oder nicht statischer dynamischer Objekte zu treffen. Typischerweise sind dabei die seitlichen und rückwärtigen Applikationen kostengünstig ausgelegt, so dass die Vermessung der Eigengeschwindigkeiten derartiger beobachteter Objekte mit großen Ungenauigkeiten verbunden sind.

Die Geometrie ausgedehnter Objekte sowie die Messeigenschaften der verwendeten Sensoren führen jedoch zu zusätzlichen Ungenauigkeiten. Beispielsweise gleitet bei einem Radar bei Vorbeifahren an einer Leitplanke der sich auf der Leitplanke befindliche Reflexionspunkt über die Leitplanke derart hinweg, dass die tatsächliche Relativgeschwindigkeit zwischen dem eigenen Fahrzeug und der Leitplanke oft systematisch unterschätzt wird.

Aufgabe der Erfindung ist es, eine Verbesserung der Trennung von statischen und nicht statischen Objekten für Fahrerassistenzfunktionen zu schaffen, insbesondere für die Erkennung von Leitplanken, Mauern, Bürgersteigen, Zäunen und anderen ausgedehnten statischen Objekten.

Diese Aufgabe wird mit dem Gegenstand des Anspruchs 1 gelöst. Vorteilhafte Weiterbildungen der Erfindung ergeben sich aus den abhängigen Ansprüchen.

Erfindungsgemäß wird ein Verfahren zur Erkennung ausgedehnter statischer Objekte von einem fahrenden Fahrzeug aus geschaffen. Dazu arbeitet das Verfahren mit einer Frontkamera, die mit einer Bildverarbeitungseinrichtung zusammenwirkt. Die Frontkamera kann Fahrbahnmarkierungen auf der Straße erfassen. Eine seitliche Erfassungsvorrichtung erfasst Gegenstände im toten Winkel zum Fahrzeug. Weitere Erfassungsvorrichtungen erfassen minimale Abstände zu seitlich vorbeifahrenden oder nachfolgenden Fahrzeugen. Eine Verknüpfungseinheit verknüpft die Daten der Bildverarbeitungseinrichtung der Frontkamera mit den Daten der übrigen Erfassungsvorrichtungen in der Weise, dass ausgedehnte statische Objekte in dem Fronterfassungsbereich des Fahrzeugs erkannt und als solche in die Erfassung der seitlichen und hinteren Erfassungsvorrichtungen mit Hilfe der Verknüpfungseinheit eingehen.

Mit dem Einsatz einer Frontkamera mit Bildverarbeitungseinrichtung und dem Einsatz einer Verknüpfungseinheit ist der Vorteil verbunden, dass die Daten der Bildverarbeitungseinrichtung der Frontkamera mit den Daten der übrigen Erfassungsvorrichtungen in der Weise verknüpft werden, dass die Erkennung ausgedehnter statischer Objekte verbessert wird. Dabei überwacht die Kamera den Vorwärtsbereich des eigenen Fahrzeugs und erfasst im Vorfeld vorhandene ausgedehnte statische Objekte und ist mit einer Applikation zur Erkennung von Fahrbahnmarkierungen bereits ausgestattet. Die Bildverarbeitungsprogramme und Algorithmen zur Detektion von Fahrbahnmarkierung liefern für auf RADAR oder LIDAR basierende seitliche und rückwärtige Applikationen Informationen über Objekte, die bestimmten Hypothesen von ausgedehnten statischen Objekten entsprechen.

Dabei werden nicht nur langgestreckte Objekte der Fahrbahnmarkierungen, sondern auch Leitplanken und Mauern, die parallel zur Fahrbahn verlaufen und beim Vorbeifahren schließlich in den sensitiven Bereich der RADAR- und LIDAR-Sensoren gelangen, erfasst. Diese zusätzlichen Informationen über ausgedehnte langgestreckte statische Ziele der Frontkamera, die sich von vorne dem eigenen Fahrzeug nähern, werden derart fusioniert, dass die Objekterkennung der auf RADAR- oder LIDARbasierenden Applikationen für ausgedehnte langgestreckte statische Objekte verbessert wird und somit keine Fehlwarnungen oder irritierende Fehlalarme mehr von diesen Objekten ausgehen können.

Die von der Frontkamera übermittelten Objekte erscheinen erst später auch in dem seitlichen und rückwärtigen Detektionsbereich der RADAR- oder LIDAR-Sensoren. Jedes dieser Objekte kann also als Objektkandidat innerhalb der RADAR- bzw. LIDAR-Applikation verwendet werden. Dabei ist das Verfahren auch nicht darauf angewiesen, dass sich die Detektionsbereiche bzw. Erfassungsbereiche der Frontkamera und der seitlich und hinteren RADAR- bzw. LIDAR-Sensoren überlappen. Hier reichen Extrapolationen aus. Die benötigte Zeit zur Klassifizierung der detektierten Objekte kann somit in vorteilhafter Weise reduziert werden. Zusätzlich kann die Fehlerrate bei der Klassifizierung von statischen und dynamischen Objekten vermindert werden. Insgesamt wird somit die Trennung von statischen und nicht statischen bzw. dynamischen Objekten verbessert. Auch die Reaktionszeit der Applikation kann in vorteilhafter Weise reduziert werden.

Bei einer bevorzugten Durchführung des Verfahrens unterscheidet die Frontkamera mit Bildverarbeitungseinrichtung zwischen entgegenkommenden ausgedehnten statischen Objekten und dynamischen Objekten wie Fahrzeugen und markiert erkannte ausgedehnte statische Objekte und leitet das Ergebnis der Auswertung bzw. diese Informationen an die Verknüpfungseinheit für die Berücksichtigung bei der Auswertung der seitlichen und der hinteren Messergebnisse der Erfassungsvorrichtungen weiter.

In vorteilhafter Weise kann die Frontkamera mit Bildverarbeitung die Zeit, während der das ausgedehnte statische Objekt detektiert und algorithmisch verfolgt wird, erfassen und an die Verknüpfungseinheit zur Unterstützung der seitlichen und hinteren Erfassungsvorrichtungen weiterleiten. Außerdem kann in einer weiteren Durchführung des Verfahrens die Frontkamera mit Bildverarbeitungseinrichtung horizontale Ortskoordinaten von ausgedehnten statischen Objekten erfassen und weiterleiten. Zusätzlich lassen sich mit Hilfe der Frontkamera horizontale Geschwindigkeitskomponenten in Bezug auf ausgedehnte und statische Objekte detektieren und weiterleiten. Auch können nun verbessert Klassifikationen in Bezug auf ausgedehnte statische Objekte durch die seitlichen und hinteren Erfassungseinheiten aufgrund der Ergebnisse, welche die Frontkamera mit Bildverarbeitungseinrichtung liefert, erfasst und weitergeleitet werden. Schließlich können auch von der Frontkamera mit Bildverarbeitungseinrichtung Umgebungskriterien in Bezug auf ausgedehnte statische Objekte detektiert und weitergeleitet werden.

Da sich bei dem erfindungsgemäßen Verfahren die Erfassungsbereiche der Frontkamera und die Erfassungsbereiche der seitlichen und heckseitigen Erfassungsvorrichtung nicht überlappen, werden durch die Verknüpfungseinheit die von der Fahrzeuggeschwindigkeit abhängigen Zeitverzögerungen bis zum Eintreffen der detektierten ausgedehnten statischen Objekte in den seitlichen und hinteren Erfassungsbereichen bei der Auswertung eingerechnet. Dabei werden Fahrbahnmarkierungen, Leitplanken, Mauern, Zäune und Bürgersteige, die in den seitlichen und hinteren Erfassungsbereich gelangen, bereits von der Frontkamera mit Bildverarbeitungseinrichtung als langgestreckte statische Objekte erfasst und für Erfassungsvorrichtungen, die in dem seitlichen und hinteren Erfassungsbereich auf RADAR-oder LIDAR-Erfassung basieren, über die Verknüpfungseinheit weitergeleitet.

Eine entsprechende Verknüpfungseinrichtung wird in vorteilhafter Weise in ein bestehendes Fahrzeugführungssystem integriert, so dass vielfach eine Ergänzung der Hardware in Bezug auf Rechenkapazität, Speicherkapazität und Logikverknüpfungen nicht erforderlich ist, sofern die Reserven des vorhandenen Fahrzeugführungssystems für dieses verbesserte Verfahren zur Erkennung und Klassifizierung statischer und langgestreckte Objekte genutzt werden kann.

Die Erfindung wird nun anhand der beigefügten Figuren näher erläutert.
- Figur 1: zeigt eine schematische Draufsicht auf ein Fahrzeug, das für die Durchführung des Verfahrens gemäß der Erfindung ausgestattet ist;
- Figur 2: zeigt eine schematische Draufsicht auf eine Straße mit einem Fahrzeug gemäß Figur 1.

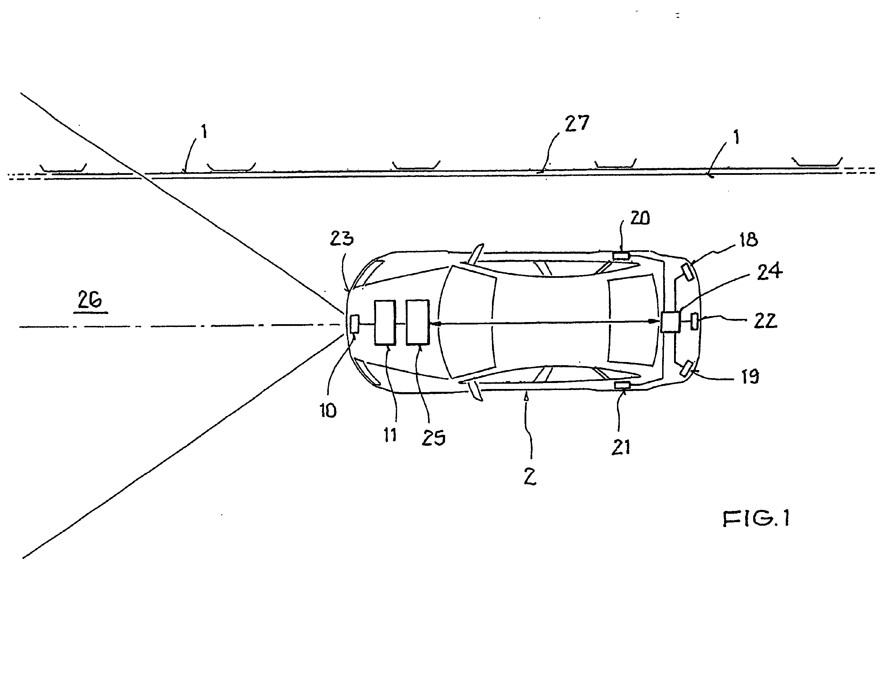

Figur 1 zeigt eine schematische Draufsicht auf ein Fahrzeug 2, das für die Durchführung des erfindungsgemäßen Verfahrens ausgestattet ist. Dazu weist das Fahrzeug 2 im vorderen Bereich 23 eine Frontkamera 10 auf, die einen Fronterfassungsbereich 26 ausleuchtet und erfasst, wobei langgestreckte statische Objekte 1, wie z.B. Leitplanken, von der Frontkamera 10 bereits erfasst werden können. Die Frontkamera 10 liefert somit ihr Bildmaterial an eine Bildverarbeitungsvorrichtung 11, die mit einer Verknüpfungseinheit 25 verbunden ist. Diese Verknüpfungseinheit fasst einen Informationsaustausch zwischen der Bildverarbeitungsvorrichtung 11 und einer im Heckbereich angeordneten Auswerteeinheit 24 für eine RADAR- bzw. LIDAR-Sensorik zusammen.

Diese Auswerteeinheit 24 wertet die von seitlichen Erfassungseinrichtungen 20 und 21 sowie 18 und 19 und mindestens einer Heckerfassungseinrichtung 22 empfangenden Messwerte aus. Durch die Verknüpfung der Bildverarbeitungsvorrichtung 11 mit der Auswerteeinheit 24 über die Verknüpfungseinheit 25 wird eine höhere Sicherheit der Zuordnung von langgestreckten statischen Objekten 1 und damit eine Klassifizierung und Unterscheidung zwischen statischen Objekten 1 und dynamischen Objekten, die im Wesentlichen durch die RADAR- bzw. LIDAR-Sensorik im seitlichen und im Heckerfassungsbereich durchgeführt wird, zuverlässiger.

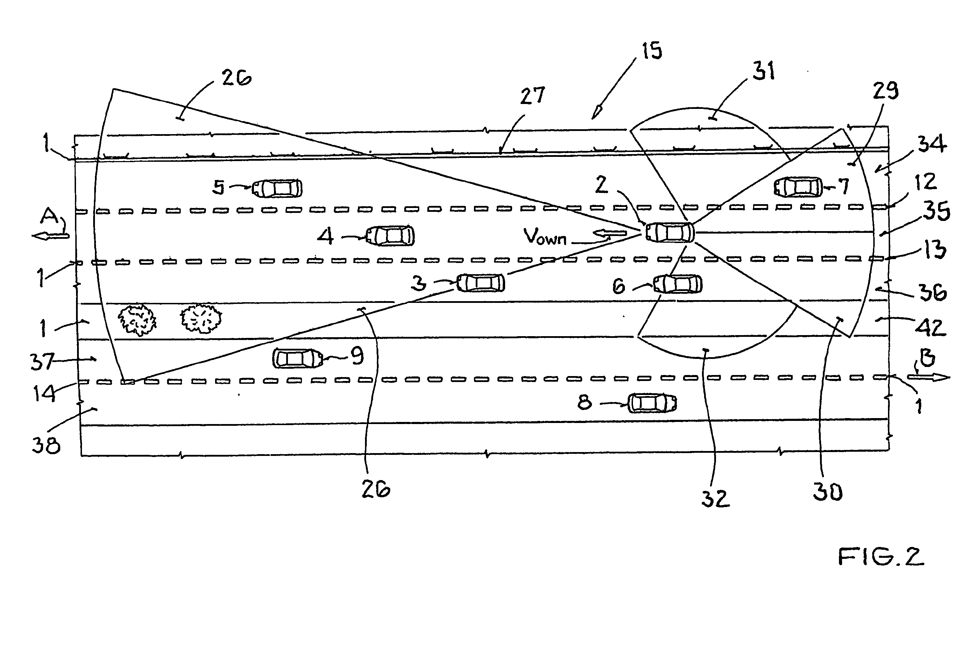

Figur 2 zeigt eine schematische Draufsicht auf eine Straße 15 mit einem Fahrzeug 2 gemäß Figur 1. Die Straße 15 ist in der einen Fahrtrichtung A mit drei Fahrbahnen 34, 35 und 36 ausgestattet, die durch Fahrbahnmarkierungen 12 und 13 voneinander getrennt sind und von einer Leitplanke 27 zu der einen Seite und zu der gegenüber liegenden Seite von einem Mittelstreifen 42 begrenzt sind. Der Mittelstreifen 42 trennt die Fahrbahnen 34 bis 36 der Fahrtrichtung A von den Fahrbahnnen 37 und 38 der Gegenfahrtrichtung B. Zu den langgestreckten statischen Objekten 1 zählen die Fahrbahnmarkierungen 12 und 13 in Fahrtrichtung A und die Fahrbahnmarkierung 14 in Gegenfahrtrichtung B.

Ferner zählen zu den langgestreckten statischen Objekten der Mittelstreifen 42 und die Leitplanke 27. Diese statischen Objekte können, zumindest soweit es die Fahrtrichtung A betrifft, von einem Fahrzeug 2, das auf der mittleren Fahrspur 35 fährt, mit Hilfe einer Frontkamera 10, wie in Figur 1 gezeigt, erfasst werden, da die Frontkamera einen Fronterfassungsbereich 26 erfasst, in dem sich in diesem Beispiel die weiteren Fahrzeuge 3, 4 und 5 bewegen und damit dynamische Ziele darstellen. Eine entsprechende Bildverarbeitungseinrichtung, die mit der Frontkamera zusammenwirkt, erkennt sowohl die statischen langgestreckten Objekte, wie Fahrbahnmarkierungen 12 und 13, Leitplanken 27 und Mittelstreifen 42, als auch die dynamischen Objekte in Form der vorausfahrenden Fahrzeuge 3, 4 und 5 und kann diese eindeutig klassifizieren.

Diese Klassifizierungsmöglichkeit ist aufgrund der Eigengeschwindigkeit des Fahrzeugs 2 durch die RADAR- bzw. LIDAR-gebundenen Detektoren der seitlichen Erfassungsbereiche 31 und 32 der Toten-Winkel-Überwachung und der Erfassungsbereich 29 und 30 des Heckbereichs nicht gegeben, so dass es durchaus unter Eigengeschwindigkeit des Fahrzeugs 2 zu Fehlinterpretationen kommen kann, wenn diese Radarerfassungssysteme Markierungen auf den Leitplanken 27 und/oder das Vorbeiziehen der Fahrbahnmarkierungen 12 und 13 messen. Das heißt, sowohl die Leitplanke 27 als auch die Fahrbahnmarkierungen 12 und 13 sowie Bäume 28 und Büsche, die auf dem Mittelstreifen 42 der Fahrbahn angeordnet sind, können, wenn sie in den Erfassungsbereich der RADAR- oder LIDAR-gebundenen Erfassungssysteme, die seitlich und im Heckbereich angebracht sind, kommen, zu Fehlalarmen führen.

Durch die erfindungsgemäße Verknüpfungseinrichtung im Fahrzeug zwischen der Bildverarbeitungseinheit der Frontseite für die Signale der Frontkamera und der Auswerteeinheit der Heckseite für RADAR- bzw. LIDAR-gebundene Signale kann erreicht werden, dass die erkannten und zugeordneten Informationen, wie z.B. die von der Frontkamera als statisch klassifizierten Objekte, in die Auswertung der Auswerteeinheit im Heckbereich eingebunden und eingerechnet werden, so dass die Zuverlässigkeit der Warnsignale für den Fahrer deutlich erhöht und verbessert ist.

Im Heckbereich sind die hier gezeigten Erfassungsbereiche 29 und 30 in einen rechtsseitigen Erfassungsbereich 29 und einen linksseitig Erfassungsbereich 30 gegliedert. Die seitlichen Erfassungsbereiche 31 und 32 erfassen auch dynamisch Objekte, die im toten Winkel zum Fahrzeug 2 rechts- bzw. linksseitig auftreten. Eine entsprechende Sensorik überwacht diese Erfassungsbereiche und kann durch weitere Erfassungsbereiche, die im Heckbereich weiter entfernte Objekte erfassen, ergänzt werden. Diese seitlichen und heckseitigen Erfassungsbereiche können sich in einem zentralen Erfassungsbereich 33 überlappen.

Wie die Figur 2 zeigt, werden von der Frontkamera, die den Fronterfassungsbereich 26 abdeckt, drei dynamische Ziele, nämlich die Fahrzeuge 3, 4 und 5, erfasst sowie die statischen Objekte, nämlich der Mittelstreifen 42, die zwei Fahrbahnmarkierungen 12 und 13 und die Leitplanke 27, als statische langgestreckte Objekte klassifiziert und können über die fahrzeugeigene Verknüpfungseinheit an die Auswerteeinheit im Heckbereich weitergeleitet werden. Damit kann sichergestellt werden, dass diese statischen Objekte, die von der Frontkamera erfasst werden, nicht zu einem Warnsignal führen.

Die in Gegenfahrtrichtung B befindlichen Fahrzeuge werden in dieser Momentaufnahme noch nicht von den Erfassungsbereichen des Fahrzeugs 2 erfasst. Während das Fahrzeug 6 im Nahbereich neben dem Fahrzeug 2 im Erfassungsbereich 31 als dynamisches Objekt festgestellt wird, wird das Fahrzeug 7 im ferneren seitlichen Bereich 29 als dynamisches Ziel erfasst. Durch die erfindungsgemäße Verknüpfung zwischen der Bildverarbeitungsvorrichtung im Frontbereich und der Auswerteeinheit im Heckbereich des Fahrzeugs 2 kann nun zuverlässig im Heckbereich trotz Eigengeschwindigkeit des Fahrzeugs 2 deutlich erkannt werden, dass die Fahrbahnmarkierungen 12 und 13, der Mittelstreifen 42 und die Leitplanke 27 statische Objekte sind und nicht als dynamische Objekte fehlinterpretiert oder fehlklassifiziert werden.

### Bezugszeichenliste

- 1: statisches Objekt
- 2: Fahrzeug
- 3: Fahrzeug
- 4: Fahrzeug
- 5: Fahrzeug
- 6: Fahrzeug
- 7: Fahrzeug
- 8: Fahrzeug
- 9: Fahrzeug
- 10: Frontkamera
- 11: Bildverarbeitungsvorrichtung
- 12: Fahrbahnmarkierung
- 13: Fahrbahnmarkierung
- 14: Fahrbahnmarkierung
- 15: Straße
- 16: toter Winkel
- 17: toter Winkel
- 18: seitliche Erfassung
- 19: seitliche Erfassung
- 20: Abstandserfassung
- 21: Abstandserfassung
- 22: Abstandserfassung
- 23: vorderer Bereich
- 24: Auswerteeinheit
- 25: Verknüpfungseinheit
- 26: Fronterfassungsbereich
- 27: Leitplanke
- 28: Baum
- 29: Erfassungsbereich
- 30: Erfassungsbereich
- 31: Erfassungsbereich
- 32: Erfassungsbereich
- 33: Erfassungsbereich
- 34: Fahrbahn
- 35: Fahrbahn
- 36: Fahrbahn
- 37: Fahrbahn
- 38: Fahrbahn
- 42: Mittelstreifen

- A: Fahrtrichtung
- B: Gegenfahrtrichtung

## Patentansprüche

1. Verfahren zur Erkennung ausgedehnter statischer Objekte (1), die parallel zu einer Fahrbahn verlaufen, von einem fahrenden Fahrzeug (2) aus, wobei
- eine Frontkamera (10) mit einer Bildverarbeitungseinrichtung (11) zusammenwirkt und Fahrbahnmarkierungen (12) auf der Straße (15) erfasst;
- mindestens eine seitliche Erfassungsvorrichtung (18, 19) Gegenstände im toten Winkel (16, 17) zum Fahrzeug (2) erfasst;
- Erfassungsvorrichtungen (20 bis 24) minimale Abstände zu seitlich vorbeifahrenden (20, 21) oder nachfolgenden (22) Fahrzeugen erfassen;
- eine Verknüpfungseinheit (25) die Daten der Bildverarbeitungsvorrichtung (11) der Frontkamera (10) mit den Daten der übrigen Erfassungsvorrichtungen (16 bis 23) verknüpft
**dadurch gekennzeichnet, dass**
die Verknüpfungseinheit (25) die Daten der Bildverarbeitungsvorrichtung (11) der Frontkamera (10) mit den Daten der übrigen Erfassungsvorrichtungen (16 bis 23) in der Weise verknüpft, dass ausgedehnte statische Objekte (1), die parallel zur Fahrbahn verlaufen, in dem Fronterfassungsbereich (26) des Fahrzeugs (2) erkannt werden und als solche in die Erfassung der seitlichen und hinteren Erfassungsvorrichtungen (20 bis 23) mit Hilfe der Verknüpfungseinheit (25) eingehen.

2. Verfahren nach Anspruch 1,
**dadurch gekennzeichnet, dass**
die Frontkamera (10) mit Bildverarbeitung seinrichtung (11) zwischen entgegenkommenden ausgedehnten statischen Objekten (1) und dynamischen Objekten (6, 7, 8) unterscheidet und erkannte ausgedehnte statische Objekte (1) markiert und für die seitlichen und hinteren Erfassungsvorrichtungen (18 bis 22) an die Verknüpfungseinheit (25) weiterleitet.

3. Verfahren nach Anspruch 1 oder Anspruch 2,
**dadurch gekennzeichnet, dass**
die Frontkamera (10) mit Bildverarbeitung seinrichtung (11) die Zeit, während der das ausgedehnte statische Objekt (1) detektiert und algorithmisch verfolgt wird, erfasst und weiterleitet.

4. Verfahren nach einem der vorhergehenden Ansprüche,
**dadurch gekennzeichnet, dass**
die Frontkamera (10) mit Bildverarbeitung seinrichtung (11) horizontale Ortskoordinaten von ausgedehnten statischen Objekten (1) erfasst und weiterleitet.

5. Verfahren nach einem der vorhergehenden Ansprüche,
**dadurch gekennzeichnet, dass**
die Frontkamera (10) mit Bildverarbeitung seinrichtung (11) horizontale Geschwindigkeitskomponenten in Bezug auf ausgedehnte statische Objekte (1) detektiert und weiterleitet.

6. Verfahren nach einem der vorhergehenden Ansprüche,
**dadurch gekennzeichnet, dass**
die Frontkamera (10) mit Bildverarbeitung seinrichtung (11) Klassifikationen in Bezug auf ausgedehnte statische Objekte (1) erfasst und weiterleitet.

7. Verfahren nach Anspruch 6,
**dadurch gekennzeichnet, dass**
die Frontkamera (10) mit Bildverarbeitung seinrichtung (11) Umgebungskriterien in Bezug auf ausgedehnte statische Objekte (1) detektiert und weiterleitet.

8. Verfahren nach einem der vorhergehenden Ansprüche,
**dadurch gekennzeichnet, dass**
sich der Erfassungsbereich (26) der Frontkamera (1) und die Erfassungsbereiche seitlicher (18 bis 21) und heckseitiger (22) Erfassungsvorrichtungen nicht überlappen und die fahrzeuggeschwindigkeitsabhängigen Zeitverzögerungen bis zum Eintreffen der detektierten ausgedehnten statischen Objekte (1) in den seitlichen (18 bis 21) und hinteren (22) Erfassungsbereichen bei der Auswertung durch die Verknüpfungseinheit eingerechnet werden.

9. Verfahren nach Anspruch 8,
**dadurch gekennzeichnet, dass**
die Frontkamera (10) mit Bildverarbeitung seinrichtung (11) Fahrbahnmarkierungen (12), Leitplanken (27), Mauern, Zäune und Bürgersteige, die in die seitlichen und hinteren Erfassungsbereiche (18 bis 22) gelangen, bereits im Fronterfassungsbereich (26) als langgestreckte statische Objekte (1) erfasst und für die Erfassungsvorrichtungen (18 bis 22), die in den seitlichen und hinteren Erfassungsbereichen (18 bis 22) auf RADAR- oder LIDAR-Erfassung basieren, über die Verknüpfungseinheit (25) weiterleitet.

10. Verfahren nach Anspruch 8,
**dadurch gekennzeichnet, dass**
die Verknüpfungseinheit (25) in ein bestehendes Fahrzeugführungssystem integriert wird.

## Claims

1. A method for detecting extended static objects (1) running parallel to a roadway from a moving vehicle (2), wherein
- a front camera (10) interacts with an image processing device (11) and detects road surface markings (12) on the road (15);
- at least one lateral detection device (18, 19) detects objects within the blind spot (16, 17) of the vehicle (2);
- detection devices (20 to 24) detect minimum distances to vehicles (20, 21) passing on the side or vehicles (22) travelling behind;
- a linking unit (25) links the data provided by the image processing device (11) of the front camera (10) with the data of the other detection devices (16 to 23),
**characterized in that**
the linking unit (25) links the data provided by the image processing device (11) of the front camera (10) with the data of the other detection devices (16 to 23) in such a way that extended static objects (1) running parallel to the roadway are detected in the front detection area (26) of the vehicle (2) and, with the aid of the linking unit (25), are taken into account as such in the detection process performed by the lateral and rear detection devices (20 to 23).

2. The method according to claim 1,
**characterized in that**
the front camera (10), including the image processing device, differentiates between extended static objects (1) approaching from the front and dynamic objects (6, 7, 8), and marks extended static objects (1) it has detected and forwards them to the linking unit (25) for use by the lateral and rear detection devices (18 to 22).

3. The method according to claim 1 or claim 2,
**characterized in that**
the front camera (10), including the image processing device (11), records and forwards the time during which the extended static object (1) is detected and tracked algorithmically.

4. The method according to any one of the preceding claims,
**characterized in that**
the front camera (10), including the image processing device (11), detects and forwards horizontal position coordinates of extended static objects (1).

5. The method according to any one of the preceding claims,
**characterized in that**
the front camera (10), including the image processing device (11), detects and forwards horizontal speed components relating to extended static objects (1).

6. The method according to any one of the preceding claims,
**characterized in that**
the front camera (10), including the image processing device (11), detects and forwards classifications relating to extended static objects (1).

7. The method according to claim 6,
**characterized in that**
the front camera (10), including the image processing device (11), detects and forwards environmental criteria relating to extended static objects (1).

8. The method according to any one of the preceding claims,
**characterized in that**
the area of detection (26) of the front camera (1) and the areas of detection of lateral (18 to 21) and rear (22) detection devices do not overlap, and the time delay until the extended static objects (1) which have been detected arrive in the lateral (18 to 21) and rear (22) areas of detection, which depends on the speed of the vehicle, is taken into account in the evaluation process performed by the linking unit.

9. The method according to claim 8,
**characterized in that**
the front camera (10), including the image processing device (11), identifies road surface markings (12), crash barriers (27), walls, fences and pavements as elongate static objects (1) as soon as they are in the front detection area (26) if they will later pass into the lateral and rear areas of detection (18 to 22), and forwards them via the linking unit (25) for use by the RADAR- or LIDAR-based detection devices (18 to 22) in the lateral and rear areas of detection (18 to 22).

10. The method according to claim 8,
**characterized in that**
the linking unit (25) is integrated into an existing vehicle control system.

## Revendications

1. Procédé de reconnaissance, à partir d'un véhicule (2) qui roule, d'objets statiques étendus (1) qui sont parallèles à une chaussée,
- une caméra frontale (10) coopérant avec un dispositif de traitement d'images (11) et saisissant des marquages au sol (12) sur la route (15) ;
- au moins un dispositif de saisie (18, 19) saisissant des objets dans l'angle mort (16, 17) du véhicule (2) ;
- des dispositifs de saisie (20 à 24) saisissant des distances minimales par rapport à des véhicules passant à côté (20, 21) ou roulant derrière (22) ;
- une unité de combinaison (25) combinant les données du dispositif de traitement d'images (11) de la caméra frontale (10) avec les données des dispositifs de saisie (16 à 23) restants,
**caractérisé en ce que**
l'unité de combinaison (25) combine les données du dispositif de traitement d'images (11) de la caméra frontale (10) avec les données des dispositifs de saisie (16 à 23) restants de telle manière que des objets statiques étendus (1) qui sont parallèles à la chaussée sont reconnus dans la zone de saisie frontale (26) du véhicule (2) et entrent en tant que tels dans la saisie des dispositifs de saisie (20 à 23) latéraux et arrière à l'aide de l'unité de combinaison (25).

2. Procédé selon la revendication 1,
**caractérisé en ce que**
la caméra frontale (10) avec le dispositif de traitement d'images (11) fait la distinction entre des objets statiques étendus (1) qui se dirigent en sens inverse et des objets dynamiques (6, 7, 8) et repère des objets statiques étendus (1) reconnus et les transmet à l'unité de combinaison (25) pour les dispositifs de saisie (18 à 22) latéraux et arrière.

3. Procédé selon la revendication 1 ou la revendication 2,
**caractérisé en ce que**
la caméra frontale (10) avec le dispositif de traitement d'images (11) saisit et transmet le temps pendant lequel l'objet statique étendu (1) est détecté et suivi de façon algorithmique.

4. Procédé selon une des revendications précédentes,
**caractérisé en ce que**
la caméra frontale (10) avec le dispositif de traitement d'images (11) saisit et transmet des coordonnées de lieu horizontales d'objets statiques étendus (1).

5. Procédé selon une des revendications précédentes,
**caractérisé en ce que**
la caméra frontale (10) avec le dispositif de traitement d'images (11) détecte et transmet des composantes de vitesse horizontales par rapport à des objets statiques étendus (1).

6. Procédé selon une des revendications précédentes,
**caractérisé en ce que**
la caméra frontale (10) avec le dispositif de traitement d'images (11) saisit et transmet des classifications par rapport à des objets statiques étendus (1).

7. Procédé selon la revendication 6,
**caractérisé en ce que**
la caméra frontale (10) avec le dispositif de traitement d'images (11) détecte et transmet des critères environnants par rapport à des objets statiques étendus (1).

8. Procédé selon une des revendications précédentes,
**caractérisé en ce que**
la zone de saisie (26) de la caméra frontale (1) et les zones de saisie de dispositifs de saisie latéraux (18 à 21) et côté arrière (22) ne se chevauchent pas et **en ce que** les retards, liés à la vitesse du véhicule, jusqu'à l'arrivé des objets statiques étendus (1) détectés dans les zones de saisie latérales (18 à 21) et arrière (22) sont inclus dans le calcul lors de l'analyse par l'unité de combinaison.

9. Procédé selon la revendication 8,
**caractérisé en ce que**
la caméra frontale (10) avec le dispositif de traitement d'images (11) saisit déjà dans la zone de saisie frontale (26), en tant qu'objets statiques allongés (1), des marquages au sol (12), des bordures de protection (27), des murs, des palissades et des trottoirs qui entrent dans les zones de saisie (18 à 22) latérales et arrière et les transmet, via l'unité de combinaison (25), pour les dispositifs de saisie (18 à 22) qui reposent sur une saisie RADAR ou LIDAR dans les zones de saisie (18 à 22) latérales et arrière.

10. Procédé selon la revendication 8,
**caractérisé en ce que**
l'unité de combinaison (25) est intégrée dans un système existant de guidage de véhicule.
